# EUROPEAN PATENT APPLICATION

(11) **EP 4 664 910 A1**
(43) Date of publication of application: **17.12.2025**
(21) Application number: 24753193.2
(22) Date of filing: 30.01.2024
(51) Int. Cl.: H04N 23/60, H04N 5/92, H04N 5/765

(54) **IMAGING DEVICE, CONTROL METHOD, AND PROGRAM**

(30) Priority: 09.02.2023 JP 2023018560
(71) Applicant: Canon Kabushiki Kaisha, Tokyo, 146-8501 (JP)
(72) Inventor: OYACHI, Takahiko, Tokyo 146-8501 (JP); MORITA, Hiroyasu, Tokyo 146-8501 (JP); OKADA, Yuki, Tokyo 146-8501 (JP)
(74) Representative: TBK
(86) International application number: PCT/JP2024/002940
(87) International publication number: WO 2024/166749

(57) **Abstract**

An image capturing apparatus of the present disclosure comprises: communication means for communicating with an external device; selection means for selecting an image to be forwarded to the external device as a forward target image from among images stored in storage means; forwarding means for forwarding the forward target image to the external device via the communication means; and control means for controlling a predetermined attribute of the forward target image. The control means manages, in response to the forwarding of the forward target image, the forward target image as a forwarded image, and controls the predetermined attribute of the forward target image to correspond to a forwarded state of the image.

## Description

### TECHNICAL FIELD

The present invention relates to an image capturing apparatus, a control method, and a program.

### BACKGROUND ART

Conventionally, a technique is known that provides predetermined protection to a shot image before transmission in a case where the image is to be transmitted from an image capturing apparatus to an external device, such as a server.

PTL 1 discloses a technique to set an image which has been recorded in a recording medium, and for which write protection has not been set, in a write-protected state before the image is transmitted, and then cancel the set write-protected state upon completion of the transmission. Also, PTL 2 discloses a technique to prohibit deletion of an image before and after transmission of an image file which has been recorded in a recording medium, and which is scheduled to be transmitted to an external image reception apparatus.

### CITATION LIST

### PATENT LITERATURE

PTL 1: Japanese Patent Laid-Open No. 2001-346150
PTL 2: Japanese Patent Laid-Open No. 2009-278611

### SUMMARY OF INVENTION

### TECHNICAL PROBLEM

Incidentally, there are cases where images that have been shot by an image capturing apparatus and stored in a recording medium are forwarded to an external device, such as a server. In such cases, it is desirable to be able to easily confirm which one of the images stored in the recording medium has been forwarded after the forwarding.

The present invention has been made in view of the aforementioned problem, and an object thereof is to realize a technique that can set information that enables judgment of whether an image has been forwarded, without giving a user trouble.

### SOLUTION TO PROBLEM

To solve the aforementioned problem, an image capturing apparatus of the present invention includes, for example, the following configuration. That is to say, the image capturing apparatus is characterized by including: communication means for communicating with an external device; selection means for selecting an image to be forwarded to the external device as a forward target image from among images stored in storage means; forwarding means for forwarding the forward target image to the external device via the communication means; and control means for controlling a predetermined attribute of the forward target image, wherein in response to the forwarding of the forward target image, the control means manages the forward target image as a forwarded image, and controls the predetermined attribute of the forward target image to correspond to a forwarded state of the image.

### ADVANTAGEOUS EFFECTS OF INVENTION

According to the present invention, information that enables judgment of whether an image has been forwarded can be set without giving a user trouble.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a block diagram showing an exemplary functional configuration of an image capturing apparatus according to a first embodiment.
FIG. 2 is a diagram showing an exemplary system configuration according to the first embodiment.
FIG. 3A is a diagram for describing processing for selecting an image to be forwarded according to the first embodiment.
FIG. 3B is a diagram for describing processing for selecting an image to be forwarded and processing for applying sound memo data according to the first embodiment.
FIG. 3C is a diagram for describing processing for selecting an image to be forwarded and image protection processing according to the first embodiment.
FIG. 4A is a flowchart showing a sequence of operations of image protection processing according to the first embodiment.
FIG. 4BA is a diagram for describing saving of a novel file after trimming according to the first embodiment.
FIG. 4BB is a diagram for describing application of a sound memo according to the first embodiment.
FIG. 4BC is an explanatory diagram for describing setting of protection after completion of image forwarding according to the first embodiment.
FIG. 5A is a diagram (1) schematically showing an example of a menu according to the second embodiment.
FIG. 5B is a diagram (2) schematically showing an example of a menu according to the second embodiment.
FIG. 6A is a flowchart showing a sequence of operations of image protection processing according to a third embodiment.
FIG. 6B is a diagram schematically showing an example of a menu according to the third embodiment.
FIG. 7A is a flowchart showing a sequence of operations of image protection processing according to a fourth embodiment.
FIG. 7B is a diagram schematically showing a menu according to the fourth embodiment.
FIG. 7C is a flowchart showing a sequence of operations of processing for adding supplementary information according to the fourth embodiment.

### DESCRIPTION OF EMBODIMENTS

### (First Embodiment)

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

The following describes an example in which a digital camera capable of forwarding a shot image to an external device, such as an external server, is used as an example of an image capturing apparatus. However, the present embodiment is not limited to a digital camera, and is also applicable to other devices capable of forwarding a shot image. These devices may include, for example, a smartphone, a game device, a tablet terminal, a personal computer, and the like.

### (Configuration of Image Capturing Apparatus)

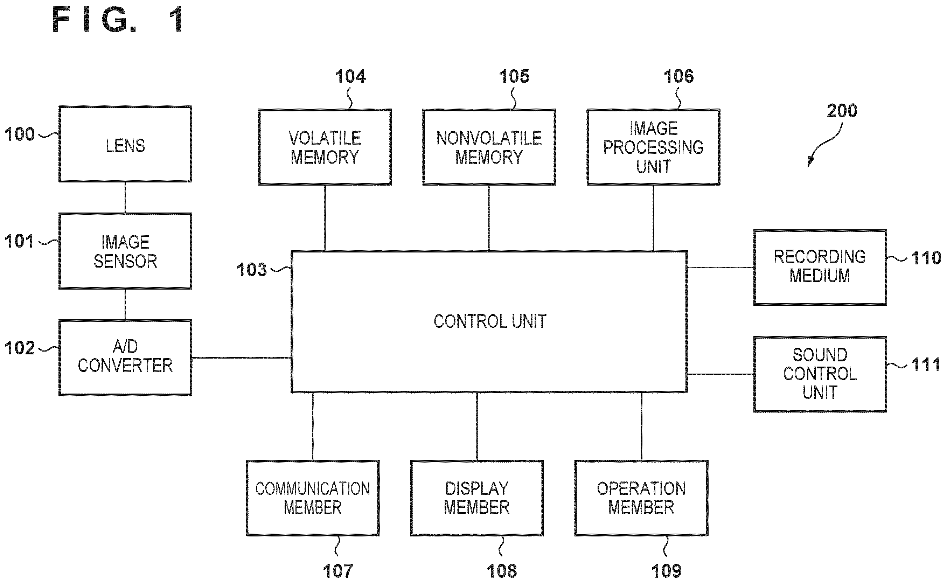

FIG. 1 is a block diagram showing an exemplary functional configuration of an image capturing apparatus 200 of the present embodiment. Note that one or more of the functional blocks shown in FIG. 1 may be realized by hardware, such as an ASIC and a programmable logic array (PLA), or may be realized by a programmable processor like a CPU, an MPU, and the like executing software. Also, they may be realized by a combination of software and hardware.

100 is a shooting lens. A single-focus lens and a zoom lens exist as types of the shooting lens. 101 is an image sensor. For example, a CCD or CMOS sensor is used as the image sensor 101, and a subject image formed by the shooting lens 100 is converted into electrical signals. 102 is an A/D converter. The A/D converter 102 converts analog output signals of the image sensor 101 into digital signals.

103 is a control unit, and includes one or more processors. The control unit 103 controls various types of operations in the image capturing apparatus 200, such as control on each constituent element and data processing, by deploying a program stored in, for example, a nonvolatile memory 105 to a volatile memory 104 and executing the program. Control performed by the control unit 103 includes control that is under an operational instruction from an operation member 109, generation of an image to be displayed on a display member 108, network control via a communication member 107, and the like. Furthermore, later-described selection of a forward target image, generation of sound data, setting of an attribute like protection, control on a forward management file, and the like are performed.

104 is a volatile memory. Image data that has been converted into digital signals by the A/D converter is temporarily held in the volatile memory 104. 105 is a nonvolatile memory. The program for the image capturing apparatus 200 executed by the control unit 103 is stored in the nonvolatile memory 105. Setting values in the image capturing apparatus 200 are also stored in the nonvolatile memory 105.

106 is an image processing unit. The image processing unit 106 executes image processing with respect to a shot image. 107 is a communication member. The communication member 107 includes a communication circuit or a communication module that communicates with an external device, such as an external server, with use of, for example, a known communication technique, such as a wireless LAN. The communication technique may be one of a technique that involves wired connection and a technique that involves wireless connection. Although the present embodiment will be described using an exemplary case where FTP forwarding is performed, an image transmission method is not limited to this.

108 is a display member. It is controlled by the control unit 103, and displays a menu, for example. Such operations as selection of a forward target image and selection of an image to which sound data is to be applied can be received via a touch panel built in the display member 108. 109 is an operation member. For example, an operation member via key operations, a touch panel, and the like can be used as the operation member.

110 is a recording medium. For example, a CompactFlash^{®} (CF) card can be used as the recording medium 110. The recording medium 110 may be attachable to and removable from the image capturing apparatus 200 via, for example, a non-illustrated card slot unit. The control unit 103 can write data in the volatile memory 104 into the recording medium 110, and read out data saved in the recording medium 110 into the volatile memory 104.

111 is a sound control unit. The sound control unit 111 converts analog data of a sound into digital data (sound data). The control unit 103 generates sound memo data using the sound data, and associates the sound memo data with image data.

### (Configuration of System)

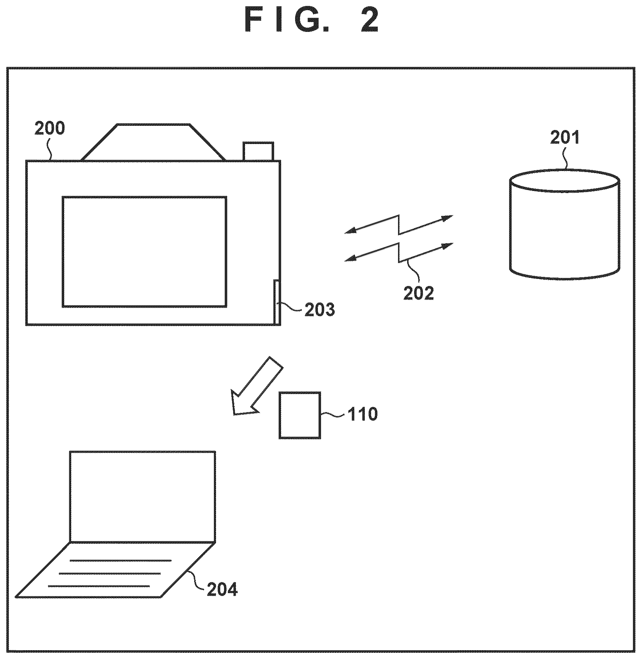

Next, with reference to FIG. 2, an exemplary configuration of a system according to the present embodiment will be described. 201 is an external server, which is a forward destination of images. The image capturing apparatus 200 forwards shot images to the external server 201 via a communication path 202. Note that the communication path 202 may be either wired or wireless, and a communication technique is not limited in particular. 203 is a card slot unit into which the recording medium 110 is inserted. 204 is external equipment. The external equipment 204 may be, for example, a personal computer, a smartphone, or the like.

For example, a case that uses FTP forwarding, which is one of techniques used in a journalistic service and the like, is conceivable as a use case where images are forwarded from the image capturing apparatus 200 to the external server 201, which is the forward destination. A function that automatically forwards shot images, and a selective forward function that starts image forwarding by performing a predetermined operation with respect to reproduced images, are conceivable as examples of a function that uses FTP forwarding. Especially in the Olympic games, large events, and the like, a case is expected where a photographer and a worker who processes images are different. Under such a circumstance, there is a need to forward shot images to the worker who processes the images as soon as possible. Furthermore, there are cases where a large number of images are shot at a time with use of, for example, a continuous shooting function of the image capturing apparatus. Under such a circumstance, too, great importance is given to how quicky and easily the images that are desired to be forwarded are selected and forwarded. Furthermore, in a service of a professional camera operator, there is a demand for a work flow for confirming whether the images to be forwarded have been actually transmitted, and whether any images have been forgotten to be transmitted. Although the details will be described later, there are cases where the recording medium 110 is attached to the external equipment 204 and forwarded images are confirmed using the external equipment 204 in the actual field, although confirmation of whether images have been forwarded can be made by operating the image capturing apparatus 200. Protection information, rating information, and the like of images are used as examples for judging, on the external equipment 204, whether images have been forwarded. According to the present embodiment, which will be specifically described below, operability can be improved when confirming images that have been forward (using the external equipment 204, for example).

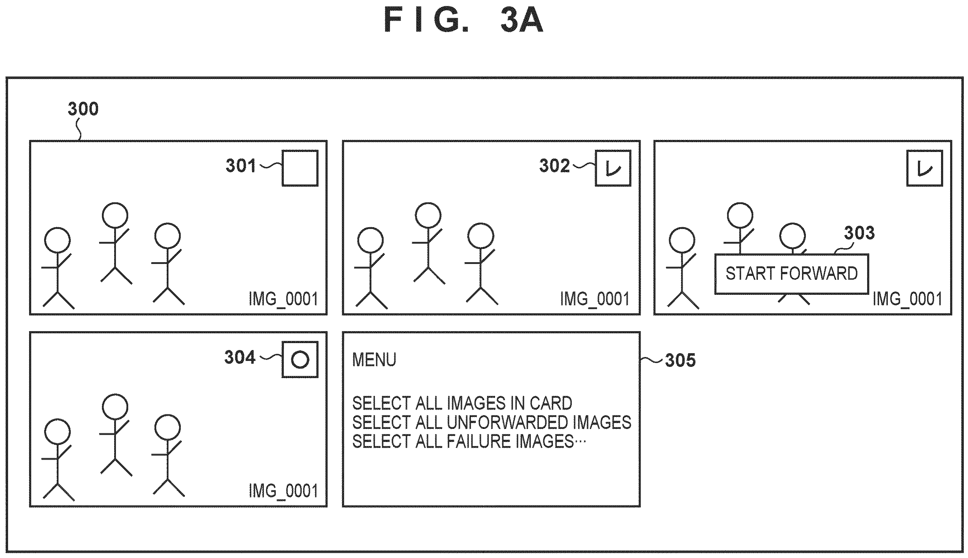

Next, with reference to FIG. 3A-FIG. 3C, a description is given of examples of selection of an image to be forwarded, application of sound memo data, and setting of manual protection, which are the premises of the description of embodiments.

### (Selection of Image to be Forwarded)

FIG. 3A shows exemplary displays of the display member 108 related to selection of an image to be forwarded. The description is provided using an exemplary case where a file "IMG-0001.JPG" is saved in the recording medium 110, for example. 300 indicates an exemplary display of the display member 108 when the image saved in the recording medium 110 has been reproduced. This is a state where the control unit 103 is reproducing the file "IMG-0001.JPG", for example. A user can set whether to forward the image while viewing the displayed image. An operation can be received by the operation member 109 via the touch panel, a key operation, and the like. 301 is a region indicating a state of forward management, which includes information indicating whether the displayed image is a forwarded image, for example.

The forward management denotes a state where a state related to forwarding, such as whether the image is a transmission target, whether the image is an image that has been transmitted, and whether the image has not been selected as a transmission target, is managed in correspondence with the image. For example, in a case where the user has selected the image as a forward target image in the display state 300, the state of forward management is managed as "waiting to be forwarded". A display indicating such a state of forward management as "waiting to be forwarded" is, for example, "✔" 302. Once the user has selected the forward target, the control unit 103 forwards the image in the "waiting to be forwarded" state to the external server 201 in a case where the selected image exists. The control unit 103 may display an explicit forward start button like 303 and start to forward the image when the forward start button has been pressed, or may start to forward the image when the image has been placed in the selected state via 302. A forward start timing and a forward start condition are not limited to these examples, and implementation is possible using various methods. When the forwarding has been completed after the forwarding has been started by an operation performed on 303, the control unit 103 manages the image by setting the state of forward management to "forwarded". The control unit 103 can display the "forwarded" state using a depiction "∘" as indicated by 304, for example.

Note that the above example has been described using an exemplary case where one image displayed on the display member 108 is selected as a forward target. However, the control unit 103 may cause display of options that allow a plurality of images to be selected at a time as a menu as indicated by 305, and cause the user to make a selection. A method of selecting images is not limited to the present embodiment, and various methods can be used. The control unit 103 can carry out the forward management using various methods. For example, the control unit 103 uses a forward management file to manage a state of forward management that indicates "waiting to be forwarded", "forwarded", or "not forwarded" on a per-image basis. For example, the forward management file is held as a hidden file in the recording medium 110. Also, the control unit 103 may update the volatile memory 104 each time the state of management has changed. Furthermore, the control unit 103 may record the state of forward management to the inside of the file as metainformation of the file.

### (Application of Sound Memo Data)

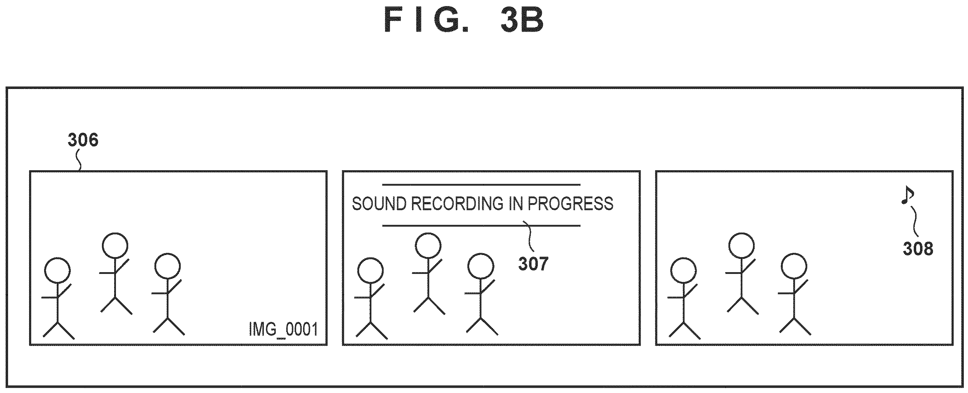

Next, a description is given of application of sound memo data. Sound memo data is associated with an image to be forwarded as associated data for the image. FIG. 3B shows exemplary displays of the display member 108 related to application of sound memo data. 306 indicates an exemplary display of the display member 108 when the image file "IMG-0001.JPG" inside the recording medium has been reproduced on the image capturing apparatus 200. In order to apply (associate) sound memo data to the reproduced image, the control unit 103 receives a user operation via, for example, the operation member 109, and causes sound recording of the sound memo data to be started. 307 indicates a display element that indicates a state where sound recording of a sound memo is in progress. The sound control unit 111 imports the sound memo data, the control unit 103 or the like applies digital processing to the sound memo data, and the sound memo data is recorded into the recording medium 110 in association with target image data. When displaying the image to which the sound memo has been applied, the control unit 103 displays a display element indicating the application of the sound memo (e.g., a musical note mark 308) on the display member 108.

Association between a sound memo and image data may be made using various methods, and is not limited to the present embodiment. In the present embodiment, for example, a file name similar to that of an image is adopted, and a file is saved with a different extension. In this case, the sound memo data for "IMG-0001.JPG" is saved under a file name "IMG-0001.WAV". As another method, information of a generated sound memo file (e.g., an identifier that uniquely specifies a sound data file) can be described in a header information portion of image data. Although the present embodiment has been described using an exemplary case where an image and sound memo data are recorded as different files, sound data may be embedded in a part of an image file.

### (Setting of Manual Protection)

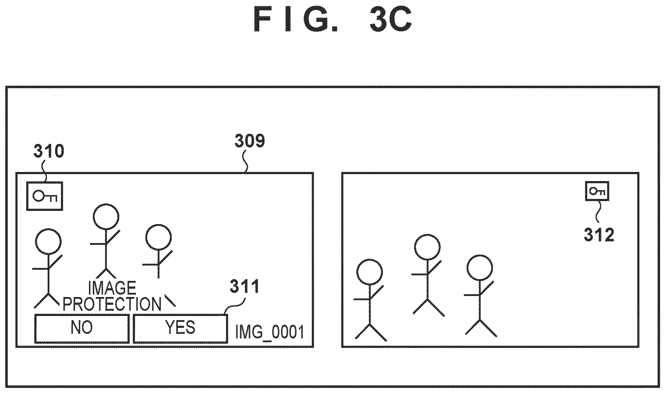

FIG. 3C shows exemplary displays of the display member 108 related to setting of manual protection. 309 indicates an exemplary display of the display member 108 when the image file "IMG-0001.JPG" inside the recording medium 110 has been reproduced. The control unit 103 sets protection with respect to the reproduced image in response to a user operation. For example, in a case where an operation performed on the operation member 109 has been received, the control unit 103 causes a detailed information setting element 310 for the image to be displayed. Furthermore, in a case where selection of 310 has been received, the control unit 103 causes selection elements 311 for image protection to be displayed. If the selection element 311 indicating that image protection is to be "provided" is selected, the control unit 103 sets protection on the image, and displays an icon 312 indicating that protection has been set on the display member 108. In this way, the user can easily recognize that protection has been set with respect to the image. When setting protection on the image, the control unit 103 adds information indicating that the image has been protected to metainformation of the image, for example.

### (Protection Processing for Forwarded Image)

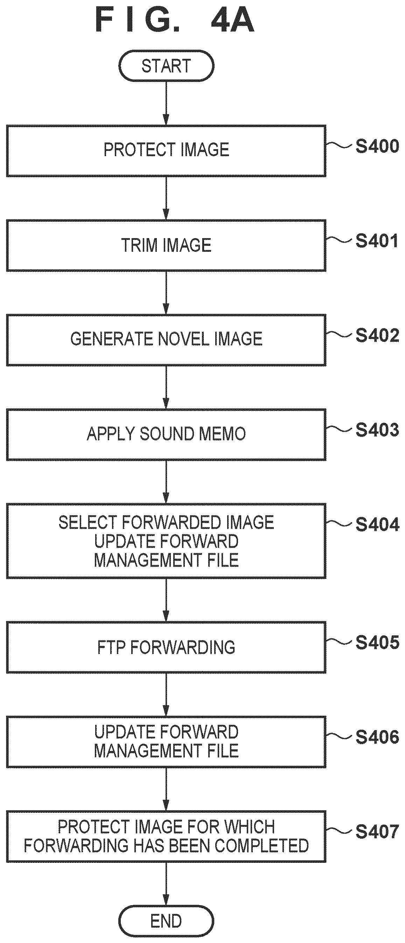

Next, with reference to FIG. 4A, a description is given of a sequence of operations of protection processing for a forwarded image according to the present embodiment. The processing described below is control to (automatically) set protection with respect to a forwarded image after FTP forwarding. Note that the sequence of operations of the present processing is realized by the control unit 103 deploying a program stored in, for example, the nonvolatile memory 105 to the volatile memory 104 and executing the program.

In S400, the control unit 103 sets protection on an image. Specifically, the control unit 103 executes setting of manual protection that has been described using FIG. 3C. This setting of manual protection can prevent the user from accidentally deleting the image, and can be used as a mark at the time of later execution of forwarding through FTP forwarding.

Note that the present embodiment will be described using an exemplary case where protection is set on an image so as to correspond to the forwarded state of the image. However, it is possible to set another attribute that makes it possible to confirm on the external equipment that information has been set at a later time, after the image is marked by way of rating and the like.

In S401, in response to a user operation, the control unit 103 trims the image on which protection has been set in S400 by further editing the image so as to remove an unnecessary portion. Note that although the present embodiment has been exemplarily described using trimming as an example of editing for the image, the present embodiment is also applicable to other types of image editing different from trimming.

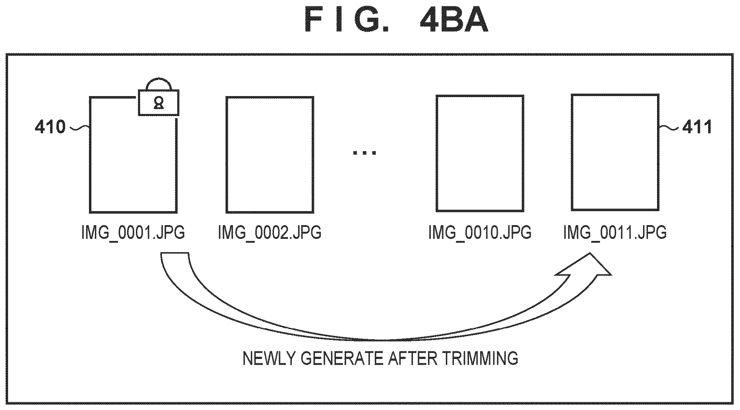

In S402, upon completion of editing of the image by the user (in S401), the control unit 103 saves the edited image as a new image (novel image) in the recording medium 110. Generation of the novel image in the present step will be described with reference to FIG. 4BA. In a case where the result of trimming for IMG_0001.JPG (410) is to be saved, the control unit 103 generates the novel image and saves the same as a file with a different name in the recording medium 110. At this time, the control unit 103 applies, for example, a number next to the last image recorded in the recording medium 110 as a file name. For example, in a case where ten images with sequential numbers, starting with IMG_0001.JPG, exist in the recording medium, the image to be newly saved is saved as IMG_0011.JPG (411). IMG_0011.JPG (411) that has been newly generated is saved as a file different from IMG_0001.JPG (410) that has been protected in S400, and therefore does not take over the attribute of protection.

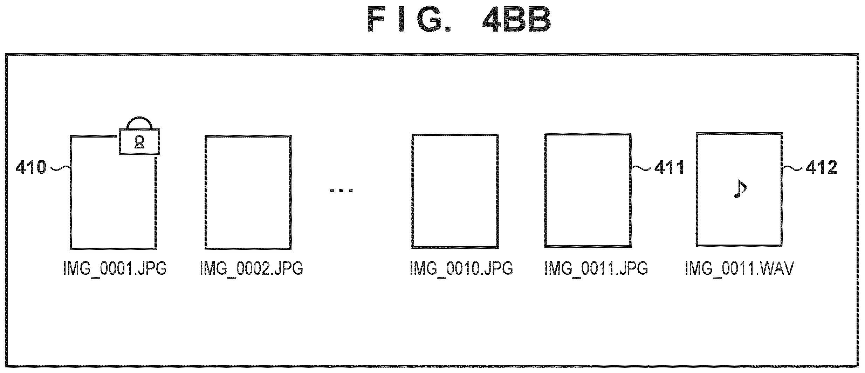

In S403, the control unit 103 applies sound memo data to the novel image through the processing that has been described using FIG. 3B. A state of the file when the sound memo data has been applied to the novel image will be described with reference to FIG. 4BB. In an example in which the sound memo data is applied to IMG_0011.JPG (411), the control unit 103 newly generates an IMG_0011.WAV file (412), which is a sound memo file. The control unit 103 sets a file name so as to indicate that IMG_0011.JPG (411) and IMG_0011.WAV (412) are associated pieces of information.

In S404, the control unit 103 receives, for example, the user's selection of an image that is to be a forward target, and updates the state of forward management in the forward management file to "waiting to be forwarded" so as to perform the forward management of the selected image. In S405, the control unit 103 executes FTP forwarding with respect to the forward target image. A known technique can be used in FTP forwarding. In S406, upon completion of FTP forwarding, the control unit 103 changes the state of forward management in the forward management file to "forwarding complete".

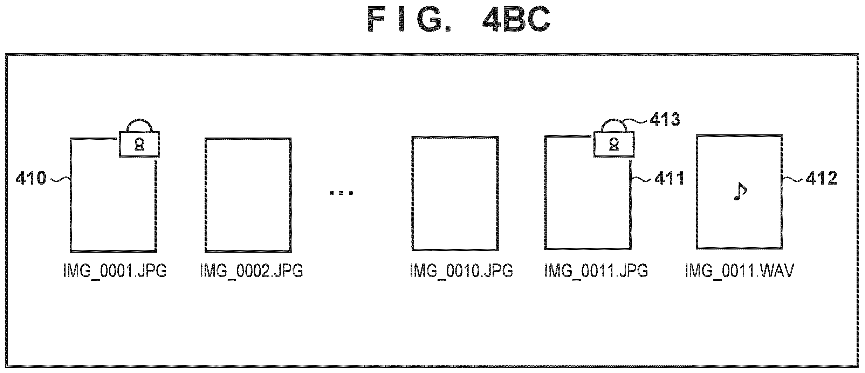

In S407, the control unit 103 sets protection on the image for which forwarding has been completed. A state where protection has been set on the image will be described with reference to FIG. 4BC. In response to changing of the state of forward management to "forwarding complete" in S406, the control unit 103 reads the image file IMG_0011.JPG (411) from the recording medium 110 into the volatile memory 104. Then, the control unit 103 sets protection on file information of the file that has been read, and updates information of the recording medium 110 using the information after the setting. As a result of this update, the image in the recording medium 110 is placed in a state 413 where protection has been set on IMG_0011.JPG (411). Note that although the present embodiment has been described using an example in which protection is set only on an image, the control unit 103 can similarly set protection on, for example, a sound file (sound memo data) that has been forwarded.

As described above, in the present embodiment, in response to forwarding of an image saved in the recording medium 110 to the external server 201, the control unit 103 sets protection on the forwarded image (i.e., causes the attribute of the image to correspond to the forwarded state of the image). This makes it possible to set information that enables judgement of whether the image has been forwarded after the image has been forwarded, without giving the user trouble. Also, when the user browses the recording medium 110 extracted from the image capturing apparatus 200 on external equipment like a personal computer, whether the image has been forwarded can be easily judged based on the presence or absence of protection information.

### (Second Embodiment)

Next, a second embodiment will be described. The second embodiment will be described in relation to an example in which whether to automatically set protection after FTP forwarding is controlled by a user setting. Note that although the present embodiment is different from the above-described embodiment in that whether to automatically set protection is settable, the configuration of the image capturing apparatus 200 and other types of processing are the same. Therefore, the same configuration and processing are given the same reference numeral, and a description thereof is omitted; the description will be provided with a focus on the differences.

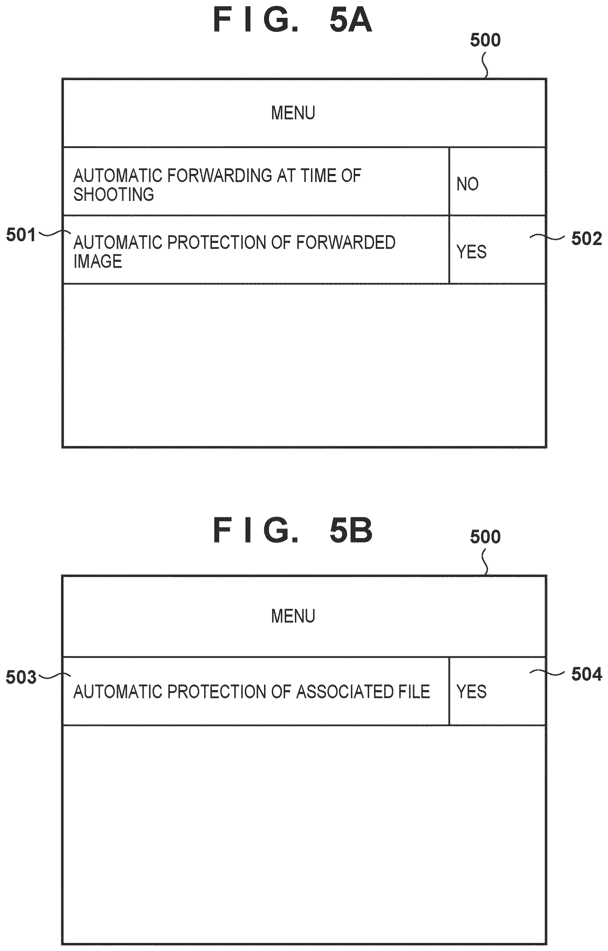

A user setting according to the present embodiment will be described with reference to FIG. 5A and FIG. 5B. 500 is a setting screen for FTP forwarding that is displayed on the display member 108, and schematically indicates a state where a menu is displayed. 501 is a menu for setting whether the user permits the control unit 103 to (automatically) set protection with respect to a forwarded image. 502 is an item that enables selection of "yes" or "no". In a case where the user has selected "yes" in relation to item 502, the control unit 103 automatically sets protection with respect to an image for which FTP forwarding has been completed through the above-described S407. In a case where the user has selected "no" in relation to item 502, the control unit 103 does not automatically set protection, and only changes the state of forward management in the forward management file to "forwarding complete" in S406.

503 is a menu for setting whether the user permits the control unit 103 to (automatically) set protection with respect to an associated file in a case where an image has been forwarded. 504 is an item that enables selection of "yes" or "no". In a case where the user has selected "yes" in relation to item 504, the control unit 103 automatically sets protection with respect to sound memo data for which FTP forwarding has been completed. In a case where the user has selected "no" in relation to item 504, the control unit 103 does not automatically set protection with respect to the sound memo data.

As described above, in the present embodiment, a setting can be configured to enable and disable automatic protection (i.e., whether to control an attribute so as to correspond to a forwarded state of an image can be set). This can address a case where a setting for protection is not desired with respect to an image after FTP forwarding has been completed.

### (Third Embodiment)

Next, a third embodiment will be described. The third embodiment will be described in relation to an example in which protection on an associated file of a forwarded image is cancelled in a case where the associated file is in a protected state after protection has been automatically set after FTP forwarding. Note that although the present embodiment is different from the above-described embodiments in that the protection on the associated file is cancelled, the configuration of the image capturing apparatus 200 and other types of processing are the same. Therefore, the same configuration and processing are given the same reference numeral, and a description thereof is omitted; the description will be provided with a focus on the differences.

### (Sequence of Operations of Processing for Cancelling Protection on Associated File)

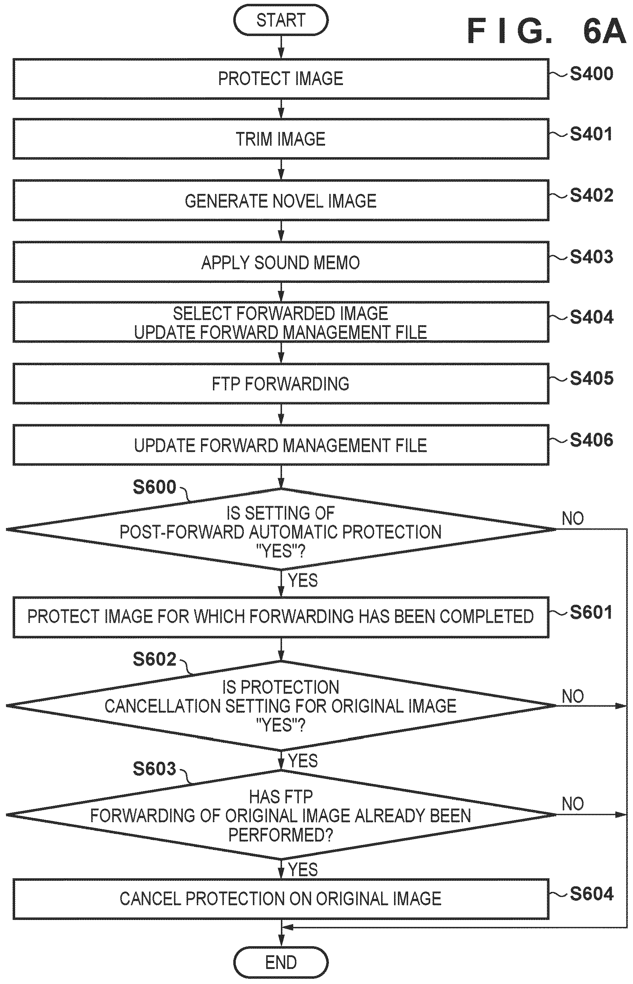

With reference to FIG. 6A, a sequence of operations of processing for cancelling protection on an associated file will be described. Note that the sequence of operations of the present processing is realized by the control unit 103 deploying a program stored in, for example, the nonvolatile memory 105 to the volatile memory 104 and executing the program.

### First, the control unit 103 executes processing of the above-described S400 to S406 similarly to the first embodiment.

In S600, the control unit 103 determines whether the setting of post-forward automatic protection, which has been described using FIG. 5A, is "yes". In a case where the control unit 103 has determined that the setting of automatic protection is set to "no", the present sequence of operations is ended. In a case where the control unit 103 has determined that the setting of automatic protection is set to "yes", processing proceeds to S601.

In S601, the control unit 103 sets protection on an image for which forwarding has been completed. As described with reference to FIG. 4BC, when FTP forwarding has been completed and the state of forward management in forward management information has been placed in "forwarding complete", the control unit 103 sets protection on file information of an image file.

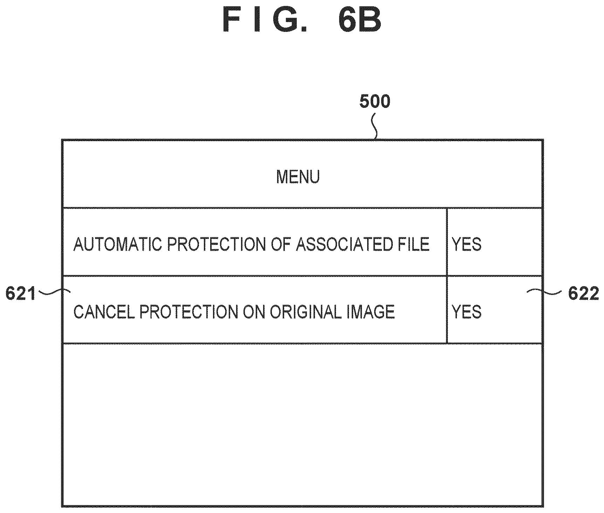

In S602, the control unit 103 determines whether a protection cancellation setting for an original image is "yes". The details will be described with reference to FIG. 6B. 500 is a setting screen for FTP forwarding that is displayed on the display member 108. 621 is a part of a menu, and is an item for setting cancellation of protection on an original image. In the above-described example in which IMG_0011.JPG (411) is newly generated by trimming IMG_0001.JPG (410) of FIG. 4BA, the original image refers to IMG_0001.JPG

(410). In this way, the original image denotes a "source image" that has been newly generated in association with a certain image. An image that has been newly generated from the original image can have associated information; the associated information may be recorded as a part of file information, or the associated information may be described in a hidden file generated in the recording medium 110. An optional technique can be used for an implementation method related to the associated information. In a case where the control unit 103 has determined that the protection cancellation setting for the original image is set to "no", the present sequence of operations is ended; in a case where it has determined that the protection cancellation setting for the original image is set to "yes", processing proceeds to S603.

In S603, the control unit 103 determines whether FTP forwarding of the original image has already been performed. To determine whether the image has been forwarded, the control unit 103 makes the determination using, for example, forward management information. In a case where the control unit 103 has determined that the original image has been forwarded, the present sequence of operations is ended; in a case where it has determined that the original image has not been forwarded, processing proceeds to S604.

In S604, the control unit 103 cancels protection on the original image. For example, the control unit 103 can realize this by deleting protection information from file information or metainformation.

As described above, in the present embodiment, in a case where an unnecessary original image is protected after protection has been set on a transmitted image after FTP forwarding, the control unit 103 cancels the protection (i.e., so as not to correspond to the forwarded state of the image). In this way, the user no longer needs to cancel the protection on the original image by him/herself, and a cumbersome operation becomes unnecessary.
Furthermore, in the above-described embodiment, in a case where it has been determined that the original image has been forwarded, cancellation of the protection on the original image is aborted (i.e., setting of an attribute so as not to correspond to the forwarded state of the image is aborted). This can prevent a situation where the judgement of whether the original image has been forwarded becomes difficult due to cancellation of protection regardless of the forwarded state of the original image.

### (Fourth Embodiment)

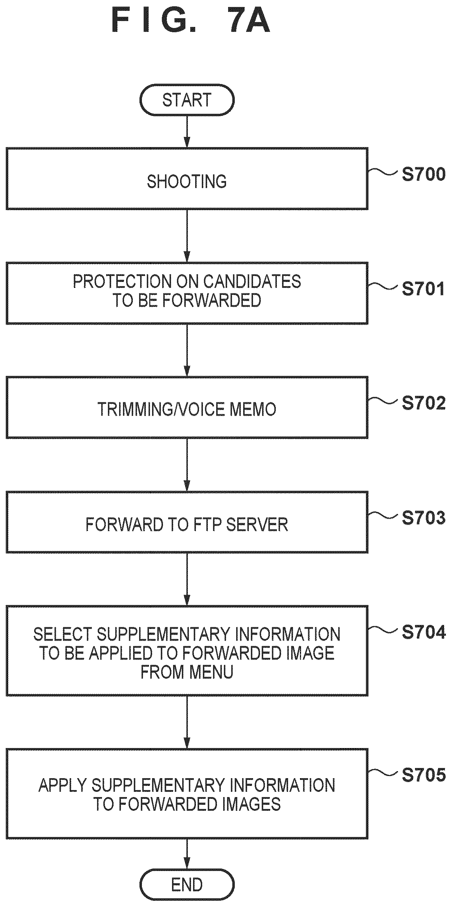

Next, with reference to FIG. 7A, a description is given of processing for applying supplementary information to an image according to a fourth embodiment. Specifically, the present embodiment will be described in relation to processing for applying optional supplementary information of the user to images inside the recording medium after FTP forwarding (i.e., setting an attribute of the images), with reference to forward management information held in the image capturing apparatus 200. In the present embodiment, once protection, trimming, and a sound memo have been applied to forward candidates after shooting, the images are forwarded to the external server, and supplementary information to be applied to the forwarded images is selected and set in accordance with an operation performed on a menu on the display member 108. After the supplementary information has been set, the user can confirm the images saved in the recording medium 110 on, for example, a personal computer, which is a different apparatus.

Note that the image capturing apparatus 200 according to the present embodiment is practically the same as that of the above-described embodiments. Therefore, the same configuration is given the same reference numeral, and a description thereof is omitted; the description will be provided with a focus on the differences. Also, the following operations are realized by the control unit 103 deploying a program stored in the nonvolatile memory 105 to the volatile memory 104 and executing the program.

In S700, the control unit 103 performs shooting in response to an instruction from the user. Also, the control unit 103 stores images that have been generated through the shooting into the recording medium 110.

In S701, the control unit 103 sets protection on images to be forwarded to the external server 201 among the shot images stored in the recording medium 110. The control unit 103 can execute the setting of protection similarly to the above-described S400.

In S702, the control unit 103 applies trimming and sound memo data to the images that have been protected in S701. Note that the control unit 103 can perform trimming similarly to the above-described S401, and can also apply the sound memo data similarly to S403. In S703, the control unit 103 forwards the images for which the user has executed processing of S701 and S702 to the external server. To forward the images, the control unit 103 can execute processing of the above-described S405.

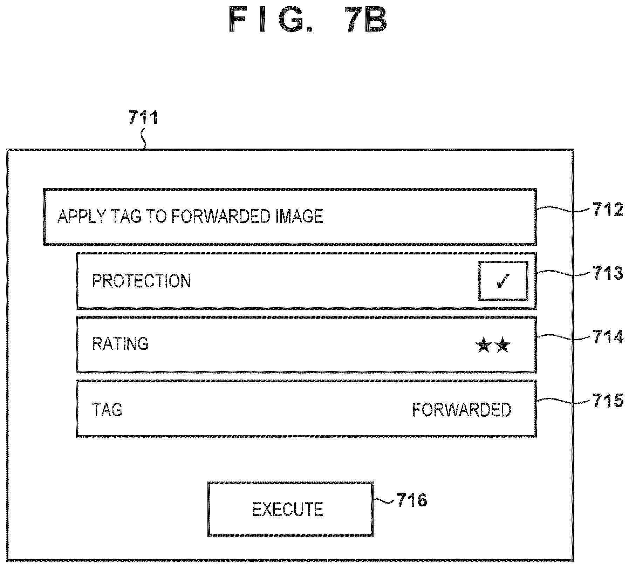

In S704, the control unit 103 applies optional supplementary information selected by the user to the images which are saved in the recording medium 110 (and which have been forwarded to the external server 201). A more specific description will be provided with reference to FIG. 7B. 711 is a menu screen displayed on the display member 108 of the image capturing apparatus 200. 712 is a main item of a function for the user to apply optional supplementary information to the images saved in the recording medium 110. 713, 714, and 715 are sub-items associated with the main item 712, and indicate types of supplementary information to be applied to the images forwarded (to the external server 201), which are saved in the recording medium 110. The user can select supplementary information to be applied to the images forwarded to the external server from among these sub-items. 716 is a button for executing the function of the main item 712. The control unit 103 executes the function of the main item 712 when the user has pressed the button 716 on the display member 108. Also, although the function of the main item 712 is executed upon pressing of the button 716 in the present embodiment, the execution timing is not limited to this. If the processing for applying supplementary information to the forwarded images is executed during processing for forwarding to the external server 201, there is a possibility that a load is placed on the forward processing of the image capturing apparatus 200. Therefore, the execution can be carried out at various timings so as not to place a load on other types of processing executed by the image capturing apparatus 200, such as shooting processing and processing for forwarding images to the external server of the image capturing apparatus 200. For example, the execution can be carried out via a menu of the image capturing apparatus 200 when a power source of the image capturing apparatus 200 is turned OFF, or after forwarding of images to the external server has finished as in the present embodiment. Note that although protection, a rating, and a tag have been described as examples of supplementary information set as sub-items in the present embodiment, supplementary information that can be applied is not limited to these.

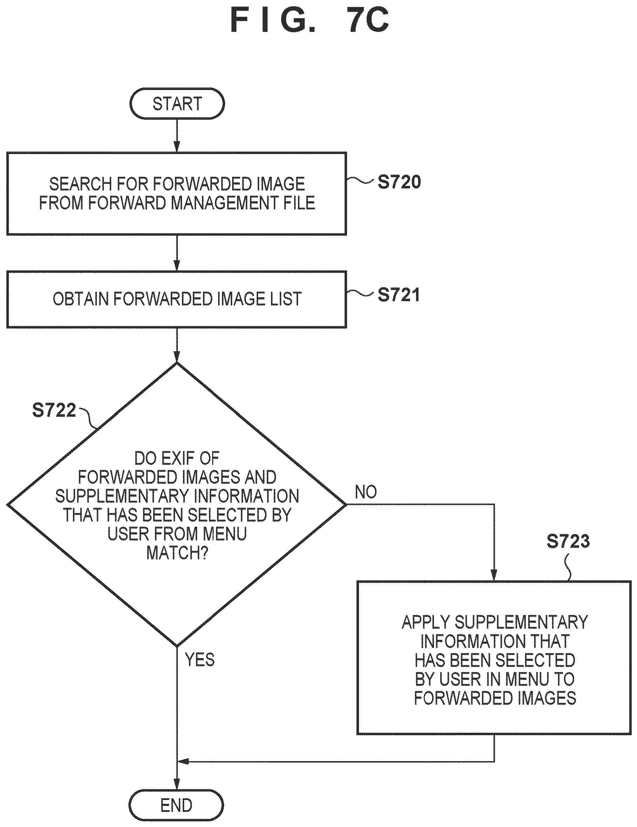

In S705, the control unit 103 applies supplementary information to the forwarded images as a result of the user using the function of the main item 712 in S704. Specific processing in S705 will be described with reference to FIG. 7C.

In S720, the control unit 103 accesses a forward management file saved in the recording medium 110, and copies forward management information to the volatile memory 104. Thereafter, the control unit 103 searches for images that have been forwarded to the external server with reference to the forward management file held in the volatile memory 104. In S721, the control unit 103 obtains a list of object handles of the forwarded images based on the result of the search in the forward management file.

In S722, the control unit 103 determines whether the supplementary information described in the EXIF of the images corresponding to the object handles obtained in S721 matches the supplementary information that has been selected by the user in S704. For example, the control unit 103 compares the supplementary information described in the EXIF of the images corresponding to the object handles obtained in S721 with the supplementary information that has been selected by the user in S704, and ends the present processing in a case where they match. In a case where they do not match, the control unit 103 proceeds to S723 in the processing. Note that in a case where the supplementary information that has been selected by the user in S704 and the supplementary information of the EXIF are the same, the supplementary information need not be updated.

In S723, the control unit 103 applies the supplementary information that has been selected by the user in S704 to the forwarded images. That is to say, the control unit 103 sets an image attribute desired by the user. Note that as a method of applying supplementary information, it is possible to make an addition to the supplementary information that has already been applied, or it is possible to change to the supplementary information selected by the user.

As a result of executing the foregoing processing, the user can extract the recording medium 110 from the image capturing apparatus 200 and confirm supplementary information of images saved in the recording medium 110 on such external equipment as a personal computer.

Note that although the above embodiment has been described using an exemplary case where processing of S704 and S705 is carried out immediately after the images have been forwarded to the external server 201, the timing of S704 and S705 is not limited to this. The processing may be carried out at an optional, post-forward timing, as long as it is before the recording medium 110 is extracted from the image capturing apparatus 200.

As described above, in the present embodiment, not only protection but also supplementary information desired by the user can be applied, at a desired timing, to forwarded images saved in the recording medium 110 of the image capturing apparatus 200.

### (Other Embodiments)

The present invention can also be realized in processing in which a program that realizes one or more functions of the above-described embodiments is supplied to a system or an apparatus via a network or a storage medium, and one or more processors in a computer of this system or apparatus reads out and executes the program. Furthermore, the present invention can also be realized by a circuit (e.g., an ASIC) that realizes the one or more functions.

The present invention is not limited to the above embodiments and various changes and modifications can be made within the spirit and scope of the present invention. Therefore, to apprise the public of the scope of the present invention, the following claims are made.

The present application claims the benefit of priority from Japanese Patent Application No. 2023-018560 filed on February 9, 2023, which is hereby incorporated by reference herein in its entirety.

## Claims

1. An image capturing apparatus, **characterized by** comprising:
communication means for communicating with an external device;
selection means for selecting an image to be forwarded to the external device as a forward target image from among images stored in storage means;
forwarding means for forwarding the forward target image to the external device via the communication means; and
control means for controlling a predetermined attribute of the forward target image,
wherein in response to the forwarding of the forward target image, the control means manages the forward target image as a forwarded image, and controls the predetermined attribute of the forward target image to correspond to a forwarded state of the image.

2. The image capturing apparatus according to claim 1, **characterized in that**
the predetermined attribute of an image includes an attribute for setting a degree of importance of the image.

3. The image capturing apparatus according to claim 1, **characterized in that**
the controlling of the predetermined attribute of an image to correspond to a forwarded state of the image includes setting protection on the image, or setting a rating of the image.

4. The image capturing apparatus according to claim 1, **characterized in that**
the forward target image is a new second image obtained by editing a first image stored in the storage means.

5. The image capturing apparatus according to claim 1, **characterized by** further comprising
first setting means for setting whether to control the predetermined attribute of the forward target image to correspond to the forwarded state of the image in response to the forwarding of the forward target image.

6. The image capturing apparatus according to claim 1, **characterized in that**
the forward target image is a new second image obtained by editing a first image stored in the storage means, and
in a case where the predetermined attribute of the first image corresponds to a forwarded state of the image, the control means controls the predetermined attribute of the first image so as not to correspond to the forwarded state of the image in response to forwarding of the second image that is the forward target image.

7. The image capturing apparatus according to claim 6, **characterized by** further comprising
second setting means for, in response to forwarding of the second image that is the forward target image, setting whether to control the predetermined attribute of the first image so as not to correspond to a forwarded state of the image.

8. The image capturing apparatus according to claim 5, **characterized in that**
in a case where the first image is a forwarded image and the predetermined attribute of the first image corresponds to a forwarded state of the image, the control means aborts controlling of the predetermined attribute of the first image so as not to correspond to the forwarded state of the image in response to forwarding of the second image that is the forward target image.

9. The image capturing apparatus according to claim 1, **characterized by** further comprising
generation means for generating sound data associated with the forward target image.

10. The image capturing apparatus according to claim 1, **characterized in that**
the forwarding means forwards sound data associated with the forward target image to the external device, and
in response to forwarding of the sound data associated with the forward target image, the control means controls the predetermined attribute of the sound data to correspond to a forwarded state of the sound data.

11. The image capturing apparatus according to claim 10, **characterized by** further comprising
third setting means for setting whether to control the predetermined attribute of the sound data to correspond to the forwarded state of the sound data in response to forwarding of the sound data associated with the forward target image.

12. The image capturing apparatus according to claim 1, **characterized by** further comprising
fourth setting means for setting an attribute that has been selected by a user operation from among a plurality of attributes as the predetermined attribute controlled by the control means.

13. The image capturing apparatus according to claim 12, **characterized in that**
the control means controls an attribute that has been selected by the user for an image forwarded by the forwarding means to correspond to a forwarded state of the image.

14. The image capturing apparatus according to claim 13, **characterized in that**
in a case where the attribute that has been selected by the user for the forwarded image indicates that the attribute does not correspond to the forwarded state of the image, the control means controls the attribute that has been selected by the user to correspond to the forwarded state of the image.

15. A control method for an image capturing apparatus that includes communication means for communicating with an external device, **characterized by** comprising:
a selection step in which selection means selects an image to be forwarded to the external device as a forward target image from among images stored in storage means;
a forwarding step in which forwarding means forwards the forward target image to the external device via the communication means; and
a control step in which control means controls a predetermined attribute of the forward target image,
wherein in the control step, in response to the forwarding of the forward target image, the forward target image is managed as a forwarded image, and the predetermined attribute of the forward target image is controlled to correspond to a forwarded state of the image.

16. A program for causing a computer to function as each means of the image capturing apparatus according to any one of claims 1 to 14.
